(19)

Europäisches
Patentamt
European
Patent Office
Office européen
des brevets

(11)  **EP 4 541 675 A1**

(12)  **EUROPEAN PATENT APPLICATION**
published in accordance with Art. 153(4) EPC

(43) Date of publication:
**23.04.2025  Bulletin 2025/17**

(21) Application number: 23823667.3

(22) Date of filing: **26.05.2023**

(51) International Patent Classification (IPC):
**B60W 30/02** (2012.01)        **B60D 1/00** (2006.01)
**B62D 13/06** (2006.01)

(52) Cooperative Patent Classification (CPC):
**B62D 15/0285; B60D 1/245; B60D 1/64;**
B62D 13/06

(86) International application number:
**PCT/JP2023/019725**

(87) International publication number:
**WO 2023/243368 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **17.06.2022  JP 2022098166**

(71) Applicant: **JTEKT Corporation
Kariya-shi, Aichi 448-8652 (JP)**

(72) Inventors:
• **TOKORO Hirotaka
Tokyo 103-0022 (JP)**
• **NITTA Nobuhiro
Tokyo 103-0022 (JP)**
• **TAMAIZUMI Terutaka
Kariya-shi, Aichi 448-8652 (JP)**
• **TAMAKI Hiromasa
Kariya-shi, Aichi 448-8652 (JP)**

(74) Representative: **Winter, Brandl - Partnerschaft
mbB
Alois-Steinecker-Straße 22
85354 Freising (DE)**

(54)  **COUPLED VEHICLE CONTROL DEVICE, COUPLED VEHICLE CONTROL METHOD, AND COUPLED VEHICLE CONTROL PROGRAM**

(57)     An articulated vehicle includes a tractor and a trailer that is towed by the tractor. The articulated vehicle is provided with an interface (80) for a driver to instruct a target virtual steering angle which is a target value of a virtual steering angle. The virtual steering angle is a variable that indicates a direction of travel of a linking point between the trailer and the tractor. The control device (50) is configured to execute processing of acquiring the target virtual steering angle, virtual steering angle control processing of operating a steering system (60) of the articulated vehicle to control the virtual steering angle to the target virtual steering angle, and processing of restricting an absolute value of vehicle speed of the articulated vehicle to a small side with the target virtual steering angle as input during execution of the virtual steering angle control processing.

Fig.2

## Description

TECHNICAL FIELD

The present disclosure relates to a control device for an articulated vehicle, a control method for the articulated vehicle, and a control program for the articulated vehicle.

BACKGROUND ART

Patent Document 1 below, for example, describes a control device that assists with reverse control of an articulated vehicle. In a case in which the articulated vehicle is traveling on a route with a small radius of curvature, this control device restricts an absolute value of vehicle speed in order to maintain control for causing the articulated vehicle to travel along the route.

Related Art Documents

Patent Documents

Patent Document 1: US Patent No. 10286950

SUMMARY OF THE INVENTION

Problem to be Solved by the Invention

The control device described above can maintain a direction of travel of a trailer in a desired direction by restricting the absolute value of vehicle speed in accordance with a travel route of the articulated vehicle. It should be noted, however, that the route itself of the articulated vehicle is not a variable that directly determines the direction of travel of the trailer. Accordingly, the controllability in controlling the direction of travel of the trailer is not necessarily high.

Means for Solving the Problem

One aspect of the present disclosure provides a control device of an articulated vehicle including a tractor and a trailer that is towed by the tractor. The articulated vehicle includes an interface for a driver to instruct a target virtual steering angle. The target virtual steering angle is a target value of a virtual steering angle. The virtual steering angle is a variable indicating a direction of travel at a linking point of the trailer and the tractor. The control device is configured to execute target virtual steering angle acquisition processing, virtual steering angle control processing, and vehicle speed restricting processing. The target virtual steering angle acquisition processing is processing of acquiring the target virtual steering angle. The virtual steering angle control processing includes processing of operating a steering system of the articulated vehicle to control the virtual steering angle to the target virtual steering angle. The vehicle speed restricting processing includes virtual-steering-angle-dependent processing that is processing in which an absolute value of vehicle speed of the articulated vehicle is restricted to a small side, and also in which the absolute value of the vehicle speed is restricted to the small side with the target virtual steering angle as input, during execution of the virtual steering angle control processing.

Another aspect of the present disclosure provides a control method for an articulated vehicle including a tractor and a trailer that is towed by the tractor. The articulated vehicle includes an interface for a driver to instruct a target virtual steering angle. The target virtual steering angle is a target value of a virtual steering angle. The virtual steering angle is a variable indicating a direction of travel at a linking point of the trailer and the tractor. The control method includes steps of executing target virtual steering angle acquisition processing, virtual steering angle control processing, and vehicle speed restricting processing. The target virtual steering angle acquisition processing is processing of acquiring the target virtual steering angle. The virtual steering angle control processing includes processing of operating a steering system of the articulated vehicle to control the virtual steering angle to the target virtual steering angle. The vehicle speed restricting processing includes virtual-steering-angle-dependent processing that is processing in which an absolute value of vehicle speed of the articulated vehicle is restricted to a small side, and also in which the absolute value of the vehicle speed is restricted to the small side with the target virtual steering angle as input, during execution of the virtual steering angle control processing.

An aspect of the present disclosure provides a control program for an articulated vehicle including a tractor and a trailer that is towed by the tractor. The articulated vehicle includes an interface for a driver to instruct a target virtual steering angle. The target virtual steering angle is a target value of a virtual steering angle. The virtual steering angle is a variable indicating a direction of travel at a linking point of the trailer and the tractor. The control program includes commands causing a computer to execute target virtual steering angle acquisition processing, virtual steering angle control processing, and vehicle speed restricting processing. The target virtual steering angle acquisition processing is processing of acquiring the target virtual steering angle. The virtual steering angle control processing includes processing of operating a steering system of the articulated vehicle to control the virtual steering angle to the target virtual steering angle. The vehicle speed restricting processing includes virtual-steering-angle-dependent processing that is processing in which an absolute value of vehicle speed of the articulated vehicle is restricted to a small side, and also in which the absolute value of the vehicle speed is restricted to the small side with the target virtual steering angle as input, during execution of the virtual steering angle control processing.

BRIEF DESCRIPTION OF THE DRAWINGS

> [FIG. 1] FIG. 1 is a perspective view illustrating a configuration of an articulated vehicle according to an embodiment.
> [FIG. 2] FIG. 2 is a block diagram illustrating a configuration of a control system for the articulated vehicles in FIG. 1.
> [FIG. 3] FIG. 3 is a flowchart showing procedures of processing executed by a control device in FIG. 2.
> [FIG. 4] FIG. 4 is a diagram illustrating a model of the articulated vehicle in FIG. 1.
> [FIG. 5] FIG. 5 is a flowchart showing procedures of processing executed by the control device in FIG. 2.
> [FIG. 6] FIG. 6 is a flowchart showing procedures of processing executed by the control device in FIG. 2.
> [FIG. 7] FIG. 7 is a flowchart showing procedures of processing executed by the control device in FIG. 2.
> [FIG. 8] FIG. 8A to FIG. 8C are diagrams showing a relation between a target virtual steering speed and a steered angle speed according to the embodiment.

MODES FOR CARRYING OUT THE INVENTION

An embodiment will be described below with reference to the drawings.

"Configuration of Articulated Vehicle"

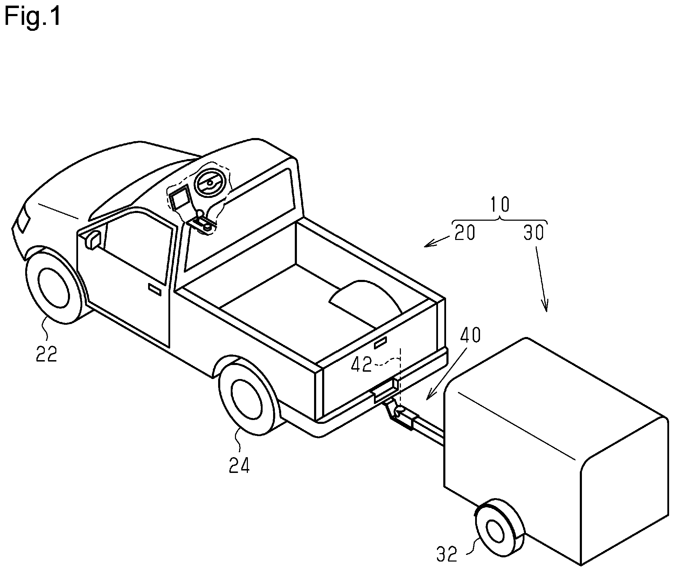

As illustrated in FIG. 1, an articulated vehicle 10 includes a tractor 20 and a trailer 30. The tractor 20 includes front wheels 22 and rear wheels 24. The front wheels 22 include two wheels, which are a right front wheel and a left front wheel, and the rear wheels 24 include two wheels, which are a right rear wheel and a left rear wheel. Also, FIG. 1 exemplifies an enclosed box trailer as the trailer 30. The trailer 30 includes wheels 32. The wheels 32 include two wheels, which are a right wheel and a left wheel.

The trailer 30 is connected to a rear portion of the tractor 20 via a ball joint 40. The ball joint 40 is a member that connects the trailer 30 to the tractor 20 so that the trailer 30 can rotate about an axis 42. The axis 42 extends in a height direction of the tractor 20.

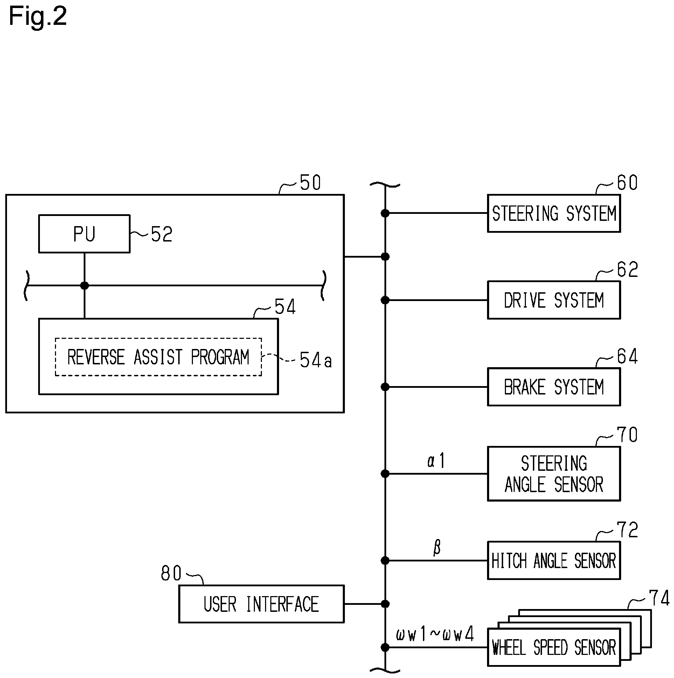

FIG. 2 illustrates part of members that the tractor 20 is equipped with. As illustrated in FIG. 2, the tractor 20 includes a control device 50. The control device 50 operates a steering system 60, a drive system 62, and a brake system 64 in order to control controlled variables of the articulated vehicle 10 that is an object of control. The controlled variables are a vehicle speed, a direction of travel, a hitch angle, and so forth. The hitch angle is an angle formed between a front-rear direction of the tractor 20 and a front-rear direction of the trailer 30.

The steering system 60 includes a steering actuator that steers steered wheels. An example of the steered wheels is the front wheels 22 illustrated in FIG. 1. Note that the steering system 60 may include a steering control device that operates the steering actuator. In this case, "the control device 50 operates the steering system 60" means that the control device 50 outputs command signals to the steering control device.

The drive system 62 includes at least one of two devices which are an internal combustion engine and a rotating electrical machine, as a thrust generating device for the vehicle. Note that the drive system 62 may include a drive control device regarding which the internal combustion engine and the rotating electrical machine are objects of control. In this case, "the control device 50 operates the drive system 62" means that the control device 50 outputs command signals to the drive control device.

The brake system 64 includes at least one of two devices which are a device that reduces the speed of rotation of the wheels by frictional force, and a device that reduces the speed of rotation of the wheels by converting power of the wheels into electrical energy. Note that the device that reduces the speed of rotation of the wheels by converting the power of the wheels to electrical energy may be shared with the rotating electrical machine of the drive system. Note that the brake system 64 may include a brake control device of which the devices that reduce the speed of rotation of the wheels are the object of control. In this case, "the control device 50 operates the brake system 62" means that the control device 50 outputs command signals to the brake control device.

The control device 50 references a steered angle $\alpha1$ of the steered wheels detected by a steering angle sensor 70 in order to control the controlled variables. The steered angle $\alpha1$ is a value that takes a positive sign for one of a right turn and a left turn and takes a negative sign for the other. The steered angle $\alpha1$ is a turning angle of tires. Note that in a case in which the steering system 60 includes a rack and pinion mechanism, for example, the steering angle sensor 70 may be a sensor that detects a pinion angle. It should be noted, however, that in this case, the control device 50 executes processing of converting the pinion angle to the turning angle of the tires. Hereinafter, for convenience of description, the turning angle of the tires that is obtained will be deemed to be a detection value of the steering angle sensor 70, even when the turning angle of the tires is obtained by the above conversion processing.

The control device 50 also references a hitch angle $\beta$ detected by a hitch angle sensor 72. The hitch angle $\beta$ may take either a positive sign or a negative sign depending on an angle formed between a direction of travel of the tractor 20 from rear to front and a direction of travel of the trailer 30 from rear to front. For example, the hitch angle $\beta$ may take a positive sign in a case in which the direction of travel of the trailer 30 from rear to front deviates counterclockwise from the direction of travel of the tractor 20 from rear to front by less than 180°. The control device 50 also references wheel speeds $\omega w1$ to

$\omega$w4 detected by wheel speed sensors 74. The wheel speeds $\omega$w1 and $\omega$w2 are the rotational speed of the right front wheel 22 and the rotational speed of the left front wheel 22, respectively. The wheel speeds $\omega$w3 and $\omega$w4 are the rotational speed of the right rear wheel 24 and the rotational speed of the left rear wheel 24, respectively.

The control device 50 sets control of the controlled variables in accordance with an operating state of a user interface 80. The user interface 80 is used to transmit intentions of a user to the control device 50, such as an intention to select one of the two of automated driving and manual driving.

The control device 50 includes a PU 52 and a storage device 54. The PU 52 is a software processing device including at least one of a CPU, a GPU, a TPU, and so forth. The storage device 54 stores a reverse assist program 54a. The reverse assist program 54a is a program that defines commands to cause the PU 52 to execute reverse assist processing. The reverse assist processing is processing of automatically performing steering processing of the steered wheels when the articulated vehicle 10 is traveling in reverse. The reverse assist program 54a is a program for reducing a burden of reverse driving on a driver.

That is to say, when the articulated vehicle 10 is traveling in reverse, even when the steered angle $\alpha$1 of the tractor 20 is the same, the behavior of the trailer 30 will change depending on the hitch angle $\beta$. Accordingly, reverse control requires advanced driving skills. The reverse assist processing by the reverse assist program 54a is processing of assisting the driver by controlling the steered angle $\alpha$1 of the tractor 20. Note however, that in the reverse assist processing, instructions to steer the trailer 30 are entrusted to the driver. This is because requests to the control device 50 increase in a case in which the control device 50 also sets steering of the trailer 30. Entrusting part of instructions to the driver makes enables reverse control to be executed by relatively simple processing.

"Steering in Reverse Assist Processing"

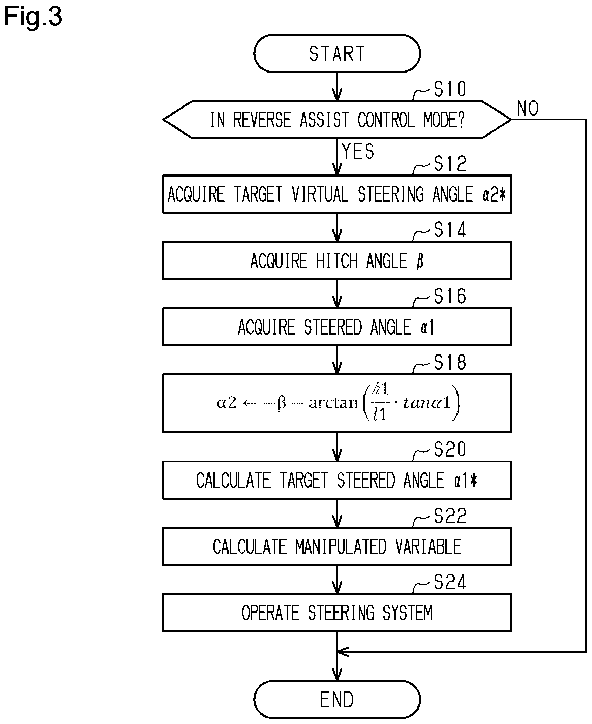

FIG. 3 shows procedures of processing in the reverse assist processing. The processing shown in FIG. 3 is implemented by the PU 52 repeatedly executing the reverse assist program 54a in predetermined cycles, for example. In the following, the step number of each processing is expressed by a number preceded by "S".

In the series of processing shown in FIG. 3, the PU 52 first determines whether or not a current mode is a reverse assist mode (S10). In a case in which determination is made that the mode is the reverse assist mode (S10: YES), the PU 52 acquires a target virtual steering angle $\alpha$2* that is input to the user interface 80 (S12). The target virtual steering angle $\alpha$2* is a target value of a virtual steering angle $\alpha$2. In the present embodiment, as an example, the virtual steering angle $\alpha$2 is defined by an angle formed between a direction of travel of the ball joint 40 with respect to the front-rear direction of the trailer 30. The target virtual steering angle $\alpha$2* is a variable that indicates an instruction given by the user regarding the steering of the trailer 30.

Next, the PU 52 acquires the hitch angle $\beta$ detected by the hitch angle sensor 72 (S14). Also, the PU 52 acquires the steered angle $\alpha$1 detected by the steering angle sensor 70 (S16).

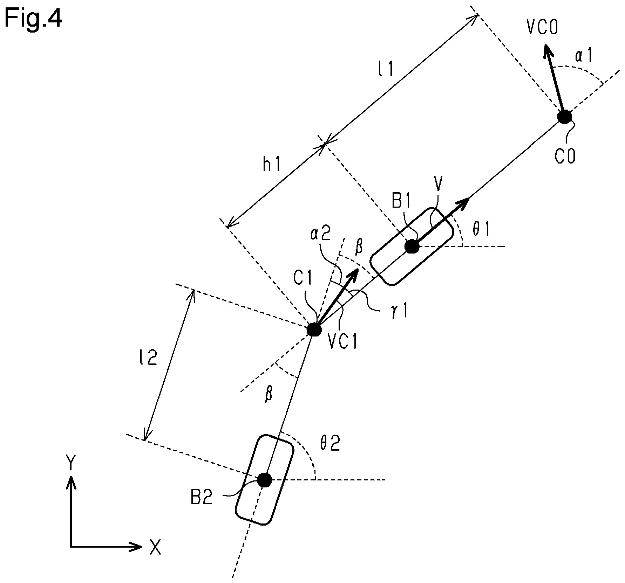

The PU 72 then takes the steered angle $\alpha$1 and the hitch angle $\beta$ as inputs, and calculates the virtual steering angle $\alpha$2 (S18). The reason for calculating the virtual steering angle $\alpha$2 from the steered angle $\alpha$1 and the hitch angle $\beta$ will be described here with reference to FIG. 4.

FIG. 4 illustrates a model of the articulated vehicle 10 that is used in the present embodiment. In the model illustrated in FIG. 4, a pair of the front wheels 22 of the tractor 20 is deemed to be a single front wheel C0, and also a pair of the rear wheels 24 of the tractor 20 is deemed to be a single rear wheel B1. That is to say, a two-wheel model is employed regarding the tractor 20. Also, a pair of the wheels 32 of the trailer 30 is deemed to be a single wheel B2. An angle formed between a line determined by the front wheel C0 and a hitch point C1, and a line determined by the hitch point C1 and the wheel B2, is the hitch angle $\beta$. The hitch point C1 corresponds to the portion of the axis 42 in FIG. 1. Also, a front wheel speed VC0, which is the speed of the front wheel C0, is a vector of advance in a direction of the steered angle $\alpha$1. The steered angle $\alpha$1 is quantified as an angle formed between a direction in which the front wheel C0 advances and the line determined by the front wheel C0 and the hitch point C1. A direction of vehicle speed V is parallel to the line determined by the front wheel C0 and the hitch point C1. Also, an angle formed between the direction of the vehicle speed V and an x direction in FIG. 4 is an angle $\theta$1. Also, an angle formed between the line connecting the wheel B2 and the hitch point C1, and the x direction, is an angle $\theta$2. Also, a distance I1 is a length between the front wheel C0 and the rear wheel B1. Also, a distance h1 is a length between the rear wheel B1 and the hitch point C1. A distance I2 is a length between hitch point C1 and the wheel B2.

According to the above definitions, a direction of a speed VC1 of the hitch point C1 relative to a direction of travel from the wheel B2 to the hitch point C1 is the virtual steering angle $\alpha$2. The virtual steering angle $\alpha$2 is given by "-($\beta$ - $\gamma$1)", using an angle $\gamma$1 of the direction of the speed VC1 of the hitch point C1 with respect to a direction of travel from the hitch point C1 to the front wheel C0.

In the model illustrated in FIG. 4, the following Expressions (c1) to (c3) hold when using coordinates (xc0, yc0) of the front wheel C0, coordinates (xb1, yb1) of the rear wheel B1, and coordinates (xc1, yc1) of the hitch point C1.

$$VC0 \cdot \cos\alpha1 = VB1 \ldots(c1)$$

$$xc0 = xb1 + l1 \cdot \cos\theta1 \quad ...(c2)$$

$$xc1 = xb1 - h1 \cdot \cos\theta1 \quad ...(c3)$$

The following Expression (c4) is obtained using an expression obtained by differentiating both sides of the above Expressions (c2) and (c3), and the Expression (c1).

$$h1 \cdot \tan\alpha1 + l1 \cdot \tan\gamma1 = 0 \quad ...(c4)$$

According to the above Expression (c4), the angle $\gamma1$ can be expressed by the steered angle $\alpha1$. Accordingly, the virtual steering angle $\alpha2$ is expressed by the following Expression (c5).

$$\alpha2 = -\beta - \arctan\{(h1/l1) \cdot \tan(\alpha1)\} \quad ...(c5)$$

That is to say, the virtual steering angle $\alpha2$ can be found from the hitch angle $\beta$ and the steered angle $\alpha1$.

FIG. 3 shows the above Expression (c5), but in practice, the PU 52 may perform map computation of the virtual steering angle $\alpha2$ in the processing of S18, by map data being stored in the storage device 54. The map data takes the hitch angle $\beta$ and the steered angle $\alpha1$ as input variables and also the virtual steering angle $\alpha2$ as an output variable.

Now, the map data is a data set of discrete values of the input variables and values of the output variable corresponding to each of the values of the input variables. Also, the map computation can be processing that, in a case in which the values of the input variables match any of the values of the input variables in the map data, takes a corresponding value of the output variable in the map data as a computation result. Also, the map computation can be processing that, in a case in which the values of the input variables do not match any of the values of the input variables in the map data, takes a value obtained by interpolating a plurality of values of the output variable included in the map data as a computation result. Also, alternatively, the map computation may be processing that, in a case in which the values of the input variables do not match any of the values of the input variables in the map data, takes the value of the output variable included in the map data that corresponds most closely to values of a plurality of the input variables in the map data, as a calculation result.

Next, the PU 52 calculates a target steered angle $\alpha1*$ as a manipulated variable by feedback control using the virtual steering angle $\alpha2$ as a controlled variable and also the target virtual steering angle $\alpha2*$ as a target value of the controlled variable (S20). The manipulated variable may be, for example, an output value of a proportional element that takes, as input, difference between a controlled variable and a target value thereof. Also, for example, the manipulated variable may be a sum of an output value of an integral element and the output value of a proportional element that have this difference as an input. Also, for example, the manipulated variable may be a sum of an output value of a proportional element, an output value of an integral element, and an output value of a derivative element, which have this difference as an input.

Next, the PU 52 calculates a manipulated variable for feedback control, in which the steered angle $\alpha1$ is taken as a controlled variable and also the target steered angle $\alpha1*$ is taken as a target controlled variable (S22). The PU 52 then operates the steering system 60 in accordance with the manipulated variable (S24).

Note that the PU 52 ends the series of processing shown in FIG. 3 for the time being, in a case in which the processing of S24 is completed, or in a case in which the processing of S10 returns a negative determination.

"Vehicle Speed Control in Reverse Assist Processing"

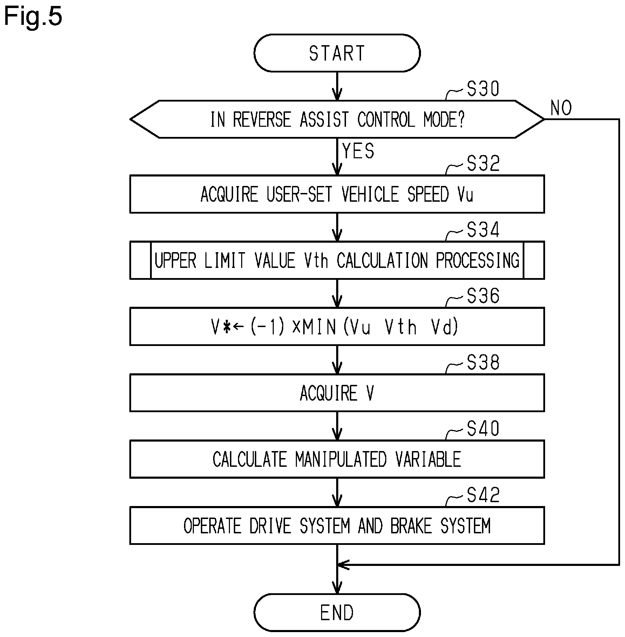

FIG. 5 shows procedures of processing related to control of vehicle speed in the reverse assist processing. The processing shown in FIG. 5 is implemented by the PU 52 repeatedly executing the reverse assist program 54a in predetermined cycles, for example.

In the series of processing shown in FIG. 5, the PU 52 first determines whether or not the current mode is a reverse assist control mode (S30). In a case in which determination is made that the mode is the reverse assist control mode (S30: YES), the PU 52 acquires a user-set vehicle speed Vu (S32). The user-set vehicle speed Vu is an absolute value of the vehicle speed V of the articulated vehicle 10 that is instructed by the driver by way of an input operation at the user interface 80. Next, the PU 52 calculates an upper limit value Vth for the absolute value of the vehicle speed in accordance with the current state of the articulated vehicle 10 (S34).

The PU 52 then substitutes a value, obtained by multiplying the smallest value from among the user-set vehicle speed Vu, the upper limit value Vth, and a default value Vd, by "-1", into a target vehicle speed V* (S36). The reason for multiplying by "-1" is to set the sign of the vehicle speed V during reverse travel to negative. The default value Vd is an upper limit value of the absolute value of the vehicle speed that is determined in advance from a stability margin. The stability margin in the reverse assist control mode decreases as the absolute value of the vehicle speed V increases. Accordingly, a default value Vd is set such that the stability margin is no smaller than a certain value. Also, the default value Vd is set taking into consideration response characteristics of the steering system 60.

Next, the PU 52 acquires the vehicle speed V (S38). The vehicle speed V is calculated by the PU 52, taking at least one of the wheel speeds $\omega w1$ to $\omega w4$ detected by the wheel speed sensor 74 as input. The vehicle speed V may be, for example, an average value of the wheel speeds ωw3 and ωw4. Next, the PU 52 calculates a manipulated variable for feedback control in which the vehicle speed V is a controlled variable and also the target vehicle speed V* is a target value of the controlled variable (S40). The manipulated variable is the driving force of the articulated vehicle 10. Note however, that the sign of the driving force can be either positive or negative. In a case in which the sign of the driving force is positive when the articulated vehicle 10 is traveling in reverse, the driving force indicates braking force of the articulated vehicle 10. The PU 52 operates the drive system 62 and the brake system 64 in accordance with the manipulated variable (S42).

Note that the PU 52 ends the series of processing shown in FIG. 5 for the time being, in a case in which the processing of S42 is completed, or in a case in which the processing of S30 returns a negative determination.

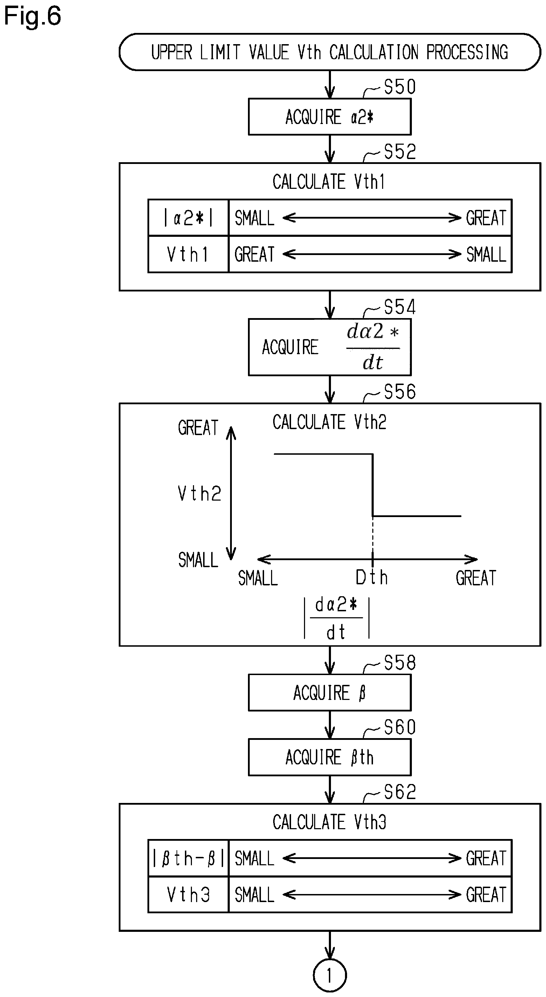

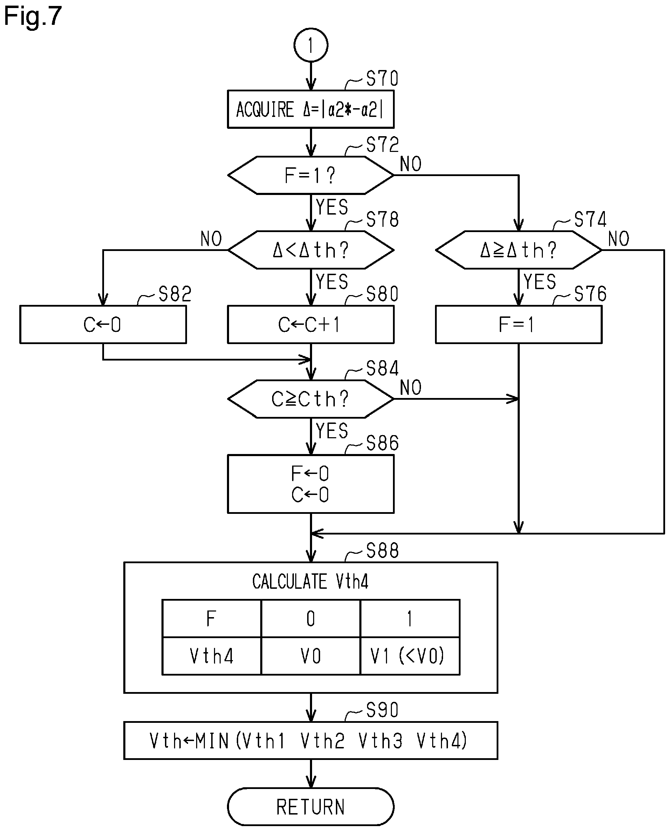

FIG. 6 and FIG. 7 show the details of the processing of S34.

As shown in FIG. 6, the PU 52 acquires the target virtual steering angle α2* (S50). Next, the PU 52 takes the target virtual steering angle α2* as input, and calculates an angle-dependent restriction value Vth1 (S52). The angle-dependent restriction value Vth1 is a variable that determines an upper limit value of the absolute value of the vehicle speed V required to maintain controllability of control, in which the virtual steering angle α2 is taken as a controlled variable and also the target virtual steering angle α2* is taken as a target value of the controlled variable. The PU 52 sets the angle-dependent restriction value Vth1 in a case in which the absolute value of the target virtual steering angle α2* is great, to be no greater than the angle-dependent restriction value Vth1 in a case in which the absolute value of the target virtual steering angle α2* is small. This processing may be processing in which map data is stored in advance in the storage device 54, and the PU 52 performs map computation of the angle-dependent restriction value Vth1. Here, the map data is data in which the absolute value of the target virtual steering angle α2* is an input variable, and also the angle-dependent restriction value Vth1 is an output variable. Note that the value of the output variable included in the map data may monotonically decrease in accordance with the value of the input variable included in the map data.

Next, the PU 52 acquires a change rate of the target virtual steering angle α2* (S54). The change rate of the target virtual steering angle α2* is calculated by the PU 52 using, as input, two or more sampling values of the target virtual steering angle α2*, acquired at mutually different timings. Next, the PU 52 calculates a speed-dependent restriction value Vth2 taking the absolute value of the change rate of the target virtual steering angle α2* as an input (S56). The speed-dependent restriction value Vth2 is an upper limit value of the vehicle speed V, for suppressing tracking lag of the actual virtual steering angle α2 with respect to change in the target virtual steering angle α2*. The PU 52 sets the value of the speed-dependent restriction value Vth2 to one of two values, depending on whether the absolute value of the change rate of the target virtual steering angle α2* is smaller than a threshold value Dth, or is no smaller than the threshold value. Now, the speed-dependent restriction value Vth2 when the speed is lower than the threshold value Dth is greater than the speed-dependent restriction value Vth2 when the speed is no lower than the threshold value Dth.

This is because the absolute value of the change rate of the virtual steering angle α2 is a setting made in light of the fact that this value more readily increases the smaller the absolute value of the vehicle speed V is.

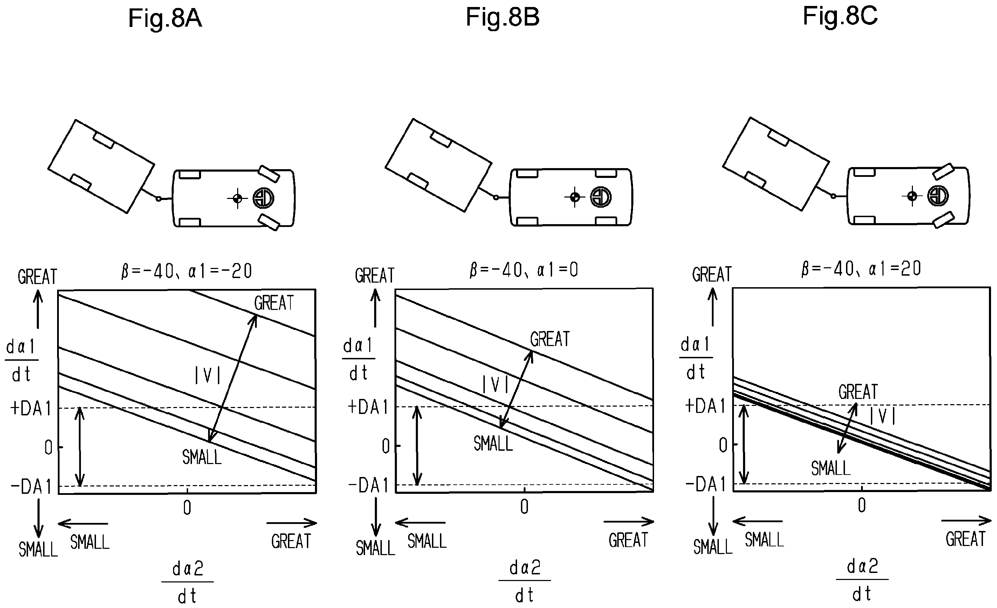

FIG. 8A to FIG. 8C illustrate dependency of a relation between the change rate of the steered angle α1 of the tractor 20 and the change rate of the virtual steering angle α2, on the vehicle speed V. Specifically, FIG. 8A illustrates a case in which the hitch angle β is "-40°" and also the steered angle α1 is "-20°". FIG. 8B illustrates a case in which the hitch angle β is "-40°" and also the steered angle α1 is "0°". FIG. 8C illustrates a case in which the hitch angle β is "-40°" and also the steered angle α1 is "20°". In FIG. 8A to FIG. 8C, a feasible range of the change rate of the steered angle α1 is a range in which a magnitude thereof is no greater than "DA1".

As illustrated in FIG. 8A to FIG. 8C, in each case, the range of values that the change rate of the virtual steering angle α2 can take is greater within a range in which the change rate of the steered angle α1 can be realized by the steering system 60, in a case in which the absolute value of the vehicle speed V is smaller.

Returning to FIG. 6, the PU 52 acquires the hitch angle β (S58). Also, the PU 52 acquires a jackknife hitch angle βth (S60). In the present embodiment, the jackknife hitch angle βth is a fixed value determined in accordance with the greatest value of the steered angle α1.

That is to say, according to the model illustrated in FIG. 4, a first-order time differential value of the hitch angle β is expressed by the following Expression.

$$
\begin{aligned}
d\beta/dt \\
= &-(V/l2)\cdot\sin\beta \\
&-\{V/(l1\cdot l2)\}\cdot(l2 + h1\cdot\cos\beta)\cdot\tan\alpha \quad ...(c6)
\end{aligned}
$$

Now, in a case in which a jackknife phenomenon occurs, the hitch angle β cannot be changed, even by setting the steered angle α1 to a maximum value α1th. Accordingly, the hitch angle β, when the time differential value of the hitch angle β in the above Expression (c6) is set to zero and also the greatest value α1th is substituted into the steered angle α1, is deemed to be the jackknife hitch angle βth. Note however, that the steered angle α1 can take either positive or negative values, and accordingly both "α1th" and "(-1)·αth" can be substituted into the above Expression (c6). Thus, the jackknife hitch angle βth actually takes two values. These two jackknife hitch angles βth are stored in advance in the storage device 54. Further, in the processing of S60, the PU 52 selects the one of the two values by which the absolute value of the difference from the hitch angle β becomes smaller, in accordance with the sign of the steered angle α1 and the sign of the change rate of the steered angle α1.

The PU 52 calculates a hitch-angle-dependent restriction value Vth3, taking an absolute value of difference between the jackknife hitch angle βth and the hitch angle β as an input (S62). The hitch-angle-dependent restriction value Vth3 is a restriction value of the vehicle speed V for suppressing the jackknife phenomenon from occurring. The PU 52 sets the hitch-angle-dependent restriction value Vth3 when the absolute value of the difference is small to be no greater than the hitch angle-dependent restriction value Vth3 when the absolute value of the difference is great. This processing may be realized by the PU 52 performing map computation of the hitch-angle-dependent restriction value Vth3, in a state in which map data is stored in advance in the storage device 54. Now, the map data is data in which the absolute value of the above difference is taken as an input variable, and also the hitch-angle-dependent restriction value Vth3 is taken as an output variable. Note that the value of the output variable included in the map data may monotonically increase in accordance with the value of the input variable included in the map data.

Next, as shown in FIG. 7, the PU 52 acquires an absolute value of difference Δ between the target virtual steering angle α2* and the virtual steering angle α2 (S70). The absolute value of difference Δ is calculated by the PU 52 with the target virtual steering angle α2* and the virtual steering angle α2 as inputs. Next, the PU 52 determines whether or not a restriction flag F is "1" (S72). The restriction flag F is set to "1" in a case in which the vehicle speed V is being restricted to a smaller side due to the absolute value of difference Δ being great. Also, the restriction flag F is set to "0" in a case in which this restriction is not imposed.

In a case in which determination is made that the restriction flag F is "0" (S72: NO), the PU 52 determines whether or not the absolute value of difference Δ is no smaller than a threshold value Δth (S74). This processing is processing of determining whether or not there is a great discrepancy between the controlled variable and the target value thereof, in feedback control in which the virtual steering angle α2 is taken as the controlled variable and also the target virtual steering angle α2* is taken as the target value of the controlled variable. In a case in which determination is made that the difference is no smaller than the threshold value Δth (S74: YES), the PU 52 substitutes "1" into the restriction flag F (S76).

On the other hand, in a case in which determination is made that the restriction flag F is "1" (S72: YES), the PU 52 determines whether or not the absolute value of difference Δ is smaller than the threshold value Δth (S78). In a case in which determination is made that the difference is smaller than the threshold value Δth (S78:

YES), the PU 52 increments a counter C by "1" (S80). The counter C measures the duration from when the absolute value of difference Δ switches from a state of being no smaller than the threshold value Δth to a state of being smaller than the threshold value Δth. On the other hand, in a case of determining that the difference is no smaller than the threshold value Δth (S78: NO), the PU 52 initializes the counter C (S82).

In a case of completing the processing of S80 and S82, the PU 82 determines whether or not the counter C is no smaller than a threshold value Cth (S84). This processing is processing of determining whether or not the duration after the absolute value of difference Δ switches from a state of being no smaller than the threshold value Δth to a state of being smaller than the threshold value Δth is a predetermined amount of time or more. In a case in which determination is made that the difference is no smaller than the threshold value Cth (S84: YES), the PU 84 substitutes "0" into the restriction flag F and also initializes the counter C (S86).

In a case of completing the processing of S76 or S86, or when a negative determination is made in the processing of S74 or S84, the PU 52 calculates a deviation-dependent restriction value Vth4 with the value of the restriction flag F as an input (S8). In a case in which the restriction flag F is "0", the PU 52 substitutes a zero'th speed V0 into the deviation-dependent restriction value Vth4. On the other hand, in a case in which the restriction flag F is "1", the PU 52 substitutes a first speed V1 into the deviation-dependent restriction value Vth4. The first speed V1 is smaller than the zero'th speed V0. The first speed V1 is a restriction value of the vehicle speed V for, in a case in which the virtual steering angle α2 is significantly discrepant with respect to the target virtual steering angle α2*, resolving this state.

The PU 52 then substitutes the smallest value from among the angle-dependent restriction value Vth1, the speed-dependent restriction value Vth2, the hitch-angle-dependent restriction value Vth3, and the deviation-dependent restriction value Vth4, into the upper limit value Vth (S90).

Note that in a case of completing the processing of S90, the PU 52 completes the processing of S34 in FIG. 5.

"Functions and Effects of Embodiment"

During reverse assist control, the PU 52 sets the upper limit value Vth in accordance with the absolute value of the target virtual steering angle α2*, the absolute value of the change rate of the target virtual steering angle α2*, the absolute value of difference Δ, and the absolute value of difference between the hitch angle β and the jackknife hitch angle βth. In a case in which the absolute value of the vehicle speed V is small, controlling the virtual steering angle α2 and the hitch angle β to near the desired values is easier than in a case in which the absolute value of the vehicle speed V is great. Thus, according to the present embodiment, the controllability of reverse assist control can be improved.

Now, the PU 52 sets the upper limit value Vth in accordance with the absolute value of the target virtual steering angle $\alpha 2^*$ and the absolute value of the change rate of the target virtual steering angle $\alpha 2^*$. Accordingly, the processing executed by PU 52 includes processing of making the absolute value of the vehicle speed in a case in which a turning radius of the trailer 30 is a first radius, to be smaller than the absolute value of the vehicle speed when the turning radius is a second radius that is greater than the first radius. This enables the controllability of turning control of the trailer 30 to be improved. That is to say, in a case in which the driver increases the absolute value of the target virtual steering angle $\alpha 2^*$, the articulated vehicle 10 can be decelerated to prepare for the trailer 30 turning. Also, the processing executed by the PU 52 also includes processing of restricting the absolute value of the vehicle speed to a smaller side in a case in which the absolute value of the change rate of the target virtual steering angle $\alpha 2^*$ is great. Thus, even in a case in which the absolute value of the change rate of the target virtual steering angle $\alpha 2^*$ is great, decrease in the ability of the virtual steering angle $\alpha 2$ to track the target virtual steering angle can be suppressed.

Also, the PU 52 sets the upper limit value Vth in accordance with the absolute value of difference $\Delta$. Thus, in a case in which control in which the virtual steering angle $\alpha 2$ is the controlled variable is disrupted by an external disturbance, the articulated vehicle 10 can be decelerated to improve controllability. Now, the controllability of the feedback control for bringing the virtual steering angle $\alpha 2$ near to the target virtual steering angle $\alpha 2^*$ is higher in a case in which the absolute value of the vehicle speed is low, as compared to a case of the absolute value of the vehicle speed being high. Accordingly, the processing executed by the PU 52 includes processing of restricting the absolute value of the vehicle speed to a small side in a case in which the absolute value of difference $\Delta$ between the virtual steering angle $\alpha 2$ and the target virtual steering angle $\alpha 2^*$ is great. This enables controllability of the feedback control to be improved.

In particular, the PU 52 continues the processing of restricting the absolute value of the vehicle speed to be no greater than the first speed V1 for a predetermined period from a point in time at which the absolute value $\Delta$ transitions from a state of being no smaller than the threshold value $\Delta$th to a state of being smaller than the threshold value $\Delta$th. This enables suppressing a hunting phenomenon, in which the absolute value $\Delta$ transitions again from a state of being smaller than the threshold value $\Delta$th to a state of being no smaller than the threshold value $\Delta$th, thereby restricting the absolute value of the vehicle speed to be no greater than the first speed V1 again, from occurring.

Also, the PU 52 sets the upper limit value Vth in accordance with the absolute value of difference between the hitch angle $\beta$ and the jackknife hitch angle $\beta$th. Now, when the hitch angle $\beta$ becomes the jackknife hitch angle $\beta$th, steering control of the trailer 30 cannot be performed. Accordingly, the processing executed by the PU 52 includes processing of restricting the absolute value of the vehicle speed to a small value in a case in which the absolute value of difference between the jackknife hitch angle $\beta$th and the hitch angle $\beta$ is small. This enables the controllability of the control of the hitch angle $\beta$ in a case in which the absolute value of the difference between the jackknife hitch angle $\beta$th and the hitch angle $\beta$ is small to be improved. Thus, the hitch angle $\beta$ can be suppressed from becoming the jackknife hitch angle $\beta$th. That is to say, decelerating the articulated vehicle 10 before becoming uncontrollable enables the articulated vehicle 10 to be proactively suppressed from falling into a situation of becoming uncontrollable.

The above-described embodiment further has the following functions and effects.

(1) The PU 52 executes processing of controlling the vehicle speed so as to near the vehicle speed instructed by the driver, on condition that the absolute value of the actual vehicle speed of the articulated vehicle 10 is no greater than the upper limit value Vth. This enables the vehicle speed of the articulated vehicle 10 to be controlled to a vehicle speed that is maximally in agreement with the intention of the driver.

(2) The PU 52 sets the smallest value from among the absolute values of the user-set vehicle speed Vu, the upper limit value Vth, and the default value Vd, as the absolute value of the target vehicle speed V*. This enables taking into account factors that cannot be expressed by the upper limit value Vth.

(3) The PU 52 executes control of the virtual steering angle $\alpha 2$ during reverse control of the articulated vehicle 10. Reverse control of the articulated vehicle 10 is more difficult than forward control, and accordingly, the PU 52 executing control of the virtual steering angle $\alpha 2$ during reverse control enables controllability of reverse control, which is difficult, to be improved.

<Other Embodiments>

Note that the present embodiment can be carried out modified as follows. The present embodiment and the following modifications can be carried out combined with each other insofar as no technical contradictions arise.

"Regarding Virtual-steering-angle-dependent Processing"

• In the processing of S52, the magnitude of the angle-dependent restriction value Vth1 is selectively set to one of three or more values in accordance with the absolute value of the target virtual steering angle $\alpha2^*$, but this is not restrictive. For example, the magnitude of the angle-dependent restriction value Vth1 may be set to one of two values, in accordance with whether the absolute value of the target virtual steering angle $\alpha2^*$ is no smaller than a threshold value, or is smaller than the threshold value.

"Regarding Change-rate-dependent Processing"

In the processing of S56, the magnitude of the speed-dependent restriction value Vth2 is set to one of two values in accordance with whether or not the absolute value of the change rate of the target virtual steering angle $\alpha2^*$ is no smaller than the threshold value Dth, but this is not restrictive. For example, the magnitude of the speed-dependent restriction value Vth2 may be set to three or more values. In this case, the speed-dependent restriction value Vth2 in a case in which the absolute value of change rate of the target virtual steering angle $\alpha2^*$ is great is set to be no greater than the speed-dependent restriction value Vth2 in a case in which the absolute value of change rate of the target virtual steering angle $\alpha2^*$ is small. This processing may be realized by the PU 52 performing map computation of the speed-dependent restriction value Vth2 in a state in which map data is stored in the storage device 54, for example. Now, the map data is data in which the absolute value of the change rate of the target virtual steering angle $\alpha2^*$ is an input variable, and also the speed-dependent restriction value Vth2 is an output variable.

"Regarding Deviation-dependent Processing"

• In the processing shown in FIG. 7, the deviation-dependent restriction value Vth4 is maintained at the first speed V1 until a predetermined amount of time has elapsed from the absolute value of the difference between the target virtual steering angle $\alpha2^*$ and the virtual steering angle $\alpha2$ transitioning from a state of being no smaller than the threshold value $\Delta th$ to a state of being smaller than the threshold value $\Delta th$, but this is not restrictive. For example, the zero'th speed V0 may be substituted into the deviation-dependent restriction value Vth4 at the timing at which the absolute value of the difference between the target virtual steering angle $\alpha2^*$ and the virtual steering angle $\alpha2$ switches from a state of being no smaller than the threshold value $\Delta th$ to a state of being smaller than the threshold value $\Delta th$.

• In the processing shown in FIG. 7, the PU 52 sets the deviation-dependent restriction value Vth4 to one of two values in accordance with whether or not the absolute value of the difference between the target virtual steering angle $\alpha2^*$ and the virtual steering

angle $\alpha2$ is no smaller than the threshold value $\Delta th$, but this is not restrictive. For example, the deviation-dependent restriction value Vth4 may be set to three or more values. In this case, the deviation-dependent restriction value Vth4 in a case in which the absolute value of the difference is great is set to be no greater than the deviation-dependent restriction value Vth4 in a case in which the absolute value of the difference is small. This processing may be realized by the PU 52 performing map computation of the deviation-dependent restriction value Vth4 in a state in which map data is stored in the storage device 54, for example. Now, the map data is data in which the absolute value of the above difference is taken as an input variable, and also the deviation-dependent restriction value Vth4 is taken as an output variable.

"Regarding Hitch-angle-dependent Processing"

• In the processing of S58 to S62, the hitch-angle-dependent restriction value Vth3 is selectively set to one of three or more values, but this is not restrictive. For example, the magnitude of the hitch-angle-dependent restriction value Vth3 may be set to one of two values in accordance with whether the absolute value of the difference between the jackknife hitch angle $\beta th$ and the hitch angle $\beta$ is no smaller than a threshold value, or is smaller than the threshold value.

"Regarding Vehicle Speed Restricting Processing"

• Setting the upper limit value Vth by processing of selecting the minimum value from among the four of the angle-dependent restriction value Vth1, the speed-dependent restriction value Vth2, the deviation-dependent restriction value Vth4, and the hitch-angle-dependent restriction value Vth3, is not essential. For example, map computation may be performed using map data in which the variables used when calculating these four values are input variables and also the upper limit value Vth is an output variable.

• The upper limit value Vth is set to the smallest value among the four of the angle-dependent restriction value Vth1, the speed-dependent restriction value Vth2, the deviation-dependent restriction value Vth4, and the hitch-angle-dependent restriction value Vth3, but this is not restrictive. For example, the upper limit value Vth may be the smallest value of three among these four. Also, for example, the upper limit value Vth may be the smallest value of two among these four. Also, for example, the upper limit value Vth may be the smallest value of two among these four. Also, the upper limit value Vth may be set to any one of the above four values, such as to the angle-dependent restriction value Vth1 or the like, for example.

"Regarding Virtual Steering Angle Control Processing"

• The manipulated variable of the feedback control in which the virtual steering angle $\alpha2$ is used as a controlled variable, and also the target virtual steering angle $\alpha2^*$ is used as a target value for the controlled variable, is not limited to the steered angle $\alpha1$ of the front wheels 22 of the tractor 20. For example, as described in a section "Regarding Steering System" below, in a case in which the steering system is a device that has a device for steering the front wheels 22 and a device for steering the rear wheels 24, a target value of a yaw rate of the tractor 20 may be the manipulated variable. In this case, the PU 52 may use the steered angle of the front wheels 22 and the steered angle of the rear wheels 24 as the manipulated variable for bringing the yaw rate near to the target value through feedback control.

"Regarding Vehicle Speed Control Processing"

• For example, in the reverse assist processing, the traveling speed of the articulated vehicle 10 may be controlled by accelerator operations and brake operations performed by the driver. In this case, however, the reverse assist processing includes processing of restricting the vehicle speed V so as not to exceed the upper limit value Vth. Also, processing may be included in order to restrict the vehicle speed V so as to not exceed the default value Vd.

"Regarding Default Value"

As described in the section "Regarding Steering System" below, in a case in which the steering system is different from that in the above embodiment, default values may be set in accordance with the relevant steering system. Now, in a case in which the steering system includes a plurality of actuators, or the like, a restriction may be set for a target yaw rate, from the perspective of a stability margin. This facilitates design of the absolute value of the vehicle speed for maintaining the stability margin.

• It is not essential for the default value Vd to be determined solely from the response characteristics of the steering system. For example, update cycles of the hitch angle $\beta$, the steered angle $\alpha1$, and the wheel speeds $\omega w1$ to $\omega w4$, may be taken into consideration when setting the value. Also, for example, the settings may be made taking into consideration communication delay time until the control device 50 receives detected values of the hitch angle $\beta$, the steered angle $\alpha1$, and the wheel speeds $\omega w1$ to $\omega w4$.

"Regarding Steering System"

The steering system of the articulated vehicle 10 is not limited to a device that steers the front wheels 22. For example, this may be a device that is equipped with a device for steering the front wheels 22 and a device for steering the rear wheels 24. Also, for example, the device may be equipped with an in-wheel motor.

"Regarding Control Device"

• The control device is not limited to an arrangement that includes the PU 52 and the storage device 54, and that executes software processing. For example, a dedicated hardware circuit, such as an ASIC or the like, for example, that executes, by hardware processing, at least part of the processing executed in the above embodiment, may be included. That is to say, the control device can be any of the following configurations (a) to (c). (a) A processing circuit including a processing device that executes all of the above processing according to a program, and a program storage device such as a storage device that stores the program. (b) A processing circuit including a processing device that executes part of the above processing according to a program, a program storage device, and a dedicated hardware circuit that executes the remainder of the processing. (c) A processing circuit including a dedicated hardware circuit that executes all of the above processing. There may be a plurality of software execution devices that include a processing device and a program storage device, and a plurality of dedicated hardware circuits.

"Regarding Computer"

• The computer that executes a control program such as the reverse assist program 54a or the like is not limited to being a computer that is installed in the articulated vehicle 10. For example, the computer may be made up of both of the PU 52 installed in the articulated vehicle 10 and a mobile terminal of the driver. In this case, the mobile terminal may execute the processing of S34, for example.

"Regarding Vehicle"

- The articulated vehicle is not limited to the vehicle exemplified in FIG. 1.

Note that in the present specification, in "processing of restricting the magnitude of B to a small side in accordance with A, while satisfying a condition that B in a case in which A is great is made to be no greater than B in a case in which A is small", the case in which A is great and the case in which A is small refer to the relative relation of size in a case of comparing the two. For example, "a case in which A is great" corresponds to "a case in which A is a first value," and "a case in which A is small" corresponds to "a case in which A is a second value that is smaller than the first value". This also means that, according to the above processing, depending on the settings of the first value and the second value, B in a case in which A is the first value may be smaller than B in a case in which A is the second value.

**Claims**

1. A control device of an articulated vehicle including a tractor and a trailer that is towed by the tractor, wherein

the articulated vehicle includes an interface for a driver to instruct a target virtual steering angle, the target virtual steering angle is a target value of a virtual steering angle, the virtual steering angle is a variable indicating a direction of travel at a linking point of the trailer and the tractor, the control device is configured to execute target virtual steering angle acquisition processing, virtual steering angle control processing, and vehicle speed restricting processing, the target virtual steering angle acquisition processing is processing of acquiring the target virtual steering angle, the virtual steering angle control processing includes processing of operating a steering system of the articulated vehicle to control the virtual steering angle to the target virtual steering angle, and the vehicle speed restricting processing includes virtual-steering-angle-dependent processing that is processing in which an absolute value of vehicle speed of the articulated vehicle is restricted to a small side, and also in which the absolute value of the vehicle speed is restricted to the small side with the target virtual steering angle as input, during execution of the virtual steering angle control processing.

2. The control device for the articulated vehicle according to claim 1, wherein

the target virtual steering angle indicates an angle formed between the direction of travel with respect to a direction of advance of the trailer, and the virtual-steering-angle-dependent processing includes change-rate-dependent processing that restricts the absolute value of the vehicle speed to the small side in accordance with the target virtual steering angle, so as to satisfy a condition that the absolute value of the vehicle speed in a case in which the absolute value of the angle formed between the direction of travel with respect to the direction of advance is great, is no greater than the absolute value of the vehicle speed in a case in which the absolute value of the angle that is formed is small.

3. The control device for the articulated vehicle according to claim 1, wherein the vehicle speed restricting processing includes change-rate-dependent processing that restricts a magnitude of the absolute value of the vehicle speed to the small side in accordance with an absolute value of a change rate while satisfying a condition that the absolute value of the vehicle speed in a case in which the absolute value of the change rate of the target virtual steering angle is great is no greater than the absolute value of the vehicle speed in a case in which the absolute value of the change rate is small.

4. The control device for the articulated vehicle according to claim 1, wherein

the control device is configured to execute virtual steering angle acquisition processing, the virtual steering angle acquisition processing is processing of acquiring the virtual steering angle, the virtual steering angle control processing includes feedback processing, the feedback processing is processing of bringing the virtual steering angle near to the target virtual steering angle by feedback control, and the vehicle speed restricting processing includes deviation-dependent processing that restricts a magnitude of the absolute value of the vehicle speed to a smaller side in accordance with an absolute value of difference between the virtual steering angle and the target virtual steering angle, while satisfying a condition that the absolute value of the vehicle speed in a case in which the absolute value of the difference is great, is no greater than the absolute value of the vehicle speed in a case in which the absolute value of the difference is small.

5. The control device for the articulated vehicle according to claim 4, wherein the deviation-dependent processing includes

processing of restricting the absolute value of the vehicle speed in a case in which the absolute value of difference between the virtual steering angle and the target virtual steering angle is no smaller than a threshold value to no greater than a first speed that is smaller than a greatest value of the absolute value of the vehicle speed that can be taken in a case in which the absolute value of the difference is smaller than the threshold value, and

processing of restricting the absolute value of the vehicle speed to no greater than the first speed for a predetermined period of time, from a point in time at which the absolute value of difference transitions from a state of being no smaller than the threshold value to a state of being smaller than the threshold value.

6. The control device for the articulated vehicle according to claim 1, wherein

the control device is configured to execute hitch angle acquisition processing of acquiring a hitch angle,

the hitch angle is an angle formed between a front-rear direction of the tractor and a front-rear direction of the trailer,

the vehicle speed restricting processing includes hitch-angle-dependent processing of restricting the absolute value of the vehicle speed in accordance with the hitch angle, while satisfying a condition that the absolute value of the vehicle speed in a case in which an absolute value of difference between the hitch angle and a jackknife hitch angle is small is no greater than the absolute value of the vehicle speed in a case in which the absolute value of difference between the hitch angle and the jackknife hitch angle is great, and

the jackknife hitch angle is the hitch angle at which jackknifing occurs.

7. The control device for the articulated vehicle according to claim 1, wherein

the control device is configured to execute vehicle speed control processing,

the vehicle speed control processing is processing of operating a drive system of the tractor to control the vehicle speed, and

the vehicle speed restricting processing is processing of restricting the absolute value of the vehicle speed controlled by the vehicle speed control processing to the small side.

8. The control device for the articulated vehicle according to claim 7, wherein

the control device is configured to execute accepting processing,

the accepting processing is processing of accepting an instruction of the absolute value of the vehicle speed from the driver,

the vehicle speed restricting processing is processing of calculating an upper limit value of the absolute value of the vehicle speed, and

the vehicle speed control processing includes processing of controlling an absolute value of an actual vehicle speed of the articulated vehicle so as to near the absolute value of the vehicle speed instructed by the driver, on condition that the absolute value of the actual vehicle speed is no greater than the upper limit value.

9. The control device for the articulated vehicle according to claim 8, wherein

the vehicle speed control processing includes target vehicle speed setting processing and operating processing,

the target vehicle speed setting processing is processing of setting a smallest value from among the absolute value of the vehicle speed that is instructed, the upper limit value, and an absolute value of a default vehicle speed, as an absolute value of a target vehicle speed, and

the operating processing is processing of operating a drive system of the articulated vehicle such that the absolute value of the vehicle speed nears the absolute value of the target vehicle speed.

10. The control device for the articulated vehicle according to claim 1, wherein the control device is configured to execute the virtual steering angle control processing when performing reverse control of the articulated vehicle.

11. A control method for an articulated vehicle including a tractor and a trailer that is towed by the tractor, wherein

the articulated vehicle includes an interface for a driver to instruct a target virtual steering angle,

the target virtual steering angle is a target value of a virtual steering angle,

the virtual steering angle is a variable indicating a direction of travel at a linking point of the trailer and the tractor,

the control method includes steps of executing target virtual steering angle acquisition processing, virtual steering angle control processing, and vehicle speed restricting processing,

the target virtual steering angle acquisition processing is processing of acquiring the target virtual steering angle,

the virtual steering angle control processing includes processing of operating a steering system of the articulated vehicle to control the virtual steering angle to the target virtual steering angle, and

the vehicle speed restricting processing includes virtual-steering-angle-dependent processing that is processing in which an absolute value of vehicle speed of the articulated vehicle is restricted to a small side, and also in which the absolute value of the vehicle speed is restricted to the small side with the target virtual steering angle as input, during execution of the virtual steering angle control processing.

12. A control program for an articulated vehicle including a tractor and a trailer that is towed by the tractor, wherein

the articulated vehicle includes an interface for a driver to instruct a target virtual steering angle,

the target virtual steering angle is a target value of a virtual steering angle,

the virtual steering angle is a variable indicating a direction of travel at a linking point of the trailer and the tractor,

the control program includes commands causing a computer to execute target virtual steering angle acquisition processing, virtual steering angle control processing, and vehicle speed restricting processing,

the target virtual steering angle acquisition processing is processing of acquiring the target virtual steering angle,

the virtual steering angle control processing includes processing of operating a steering system of the articulated vehicle to control the virtual steering angle to the target virtual steering angle, and

the vehicle speed restricting processing includes virtual-steering-angle-dependent processing that is processing in which an absolute value of vehicle speed of the articulated vehicle is restricted to a small side, and also in which the absolute value of the vehicle speed is restricted to the small side with the target virtual steering angle as input, during execution of the virtual steering angle control processing.

Fig.1

Fig.2

Fig.3

```
                        ┌─────────────┐
                        │   START     │
                        └──────┬──────┘
                               │              ⌒S10
                    ┌──────────▼──────────────┐   NO
                  ◁─┤ IN REVERSE ASSIST CONTROL MODE? ├──────┐
                    └──────────┬──────────────┘            │
                               │ YES                        │
                               │          ⌒S12              │
        ┌──────────────────────▼──────────────────────┐    │
        │ ACQUIRE TARGET VIRTUAL STEERING ANGLE α2*    │    │
        └──────────────────────┬──────────────────────┘    │
                               │          ⌒S14              │
        ┌──────────────────────▼──────────────────────┐    │
        │         ACQUIRE HITCH ANGLE β                │    │
        └──────────────────────┬──────────────────────┘    │
                               │          ⌒S16              │
        ┌──────────────────────▼──────────────────────┐    │
        │         ACQUIRE STEERED ANGLE α1             │    │
        └──────────────────────┬──────────────────────┘    │
                               │          ⌒S18              │
        ┌──────────────────────▼──────────────────────┐    │
        │                                              │    │
        └──────────────────────┬──────────────────────┘    │
                               │          ⌒S20              │
        ┌──────────────────────▼──────────────────────┐    │
        │     CALCULATE TARGET STEERED ANGLE α1*       │    │
        └──────────────────────┬──────────────────────┘    │
                               │          ⌒S22              │
        ┌──────────────────────▼──────────────────────┐    │
        │       CALCULATE MANIPULATED VARIABLE         │    │
        └──────────────────────┬──────────────────────┘    │
                               │          ⌒S24              │
        ┌──────────────────────▼──────────────────────┐    │
        │         OPERATE STEERING SYSTEM              │    │
        └──────────────────────┬──────────────────────┘    │
                               │◄───────────────────────────┘
                        ┌──────▼──────┐
                        │    END      │
                        └─────────────┘
```

S18:
$$\alpha2 \leftarrow -\beta - \arctan\left(\frac{h1}{l1} \cdot tan\alpha1\right)$$

Fig.4

Fig.5

```
                        ┌──────────────┐
                        │    START     │
                        └──────┬───────┘
                               │              ╭─S30
          ┌────────────────────▼────────────────────┐  NO
          ◁        IN REVERSE ASSIST CONTROL MODE?   ▷──────┐
          └────────────────────┬────────────────────┘      │
                            YES │          ╭─S32            │
          ┌────────────────────▼────────────────────┐      │
          │     ACQUIRE USER-SET VEHICLE SPEED Vu    │      │
          └────────────────────┬────────────────────┘      │
                               │          ╭─S34            │
          ┌────────────────────▼────────────────────┐      │
          │ UPPER LIMIT VALUE Vth CALCULATION PROCESSING │  │
          └────────────────────┬────────────────────┘      │
                               │          ╭─S36            │
          ┌────────────────────▼────────────────────┐      │
          │      V*← (-1) ×MIN (Vu  Vth  Vd)         │      │
          └────────────────────┬────────────────────┘      │
                               │          ╭─S38            │
          ┌────────────────────▼────────────────────┐      │
          │               ACQUIRE V                  │      │
          └────────────────────┬────────────────────┘      │
                               │          ╭─S40            │
          ┌────────────────────▼────────────────────┐      │
          │       CALCULATE MANIPULATED VARIABLE     │      │
          └────────────────────┬────────────────────┘      │
                               │          ╭─S42            │
          ┌────────────────────▼────────────────────┐      │
          │   OPERATE DRIVE SYSTEM AND BRAKE SYSTEM  │      │
          └────────────────────┬────────────────────┘      │
                               │◄────────────────────────────┘
                        ┌──────▼───────┐
                        │     END      │
                        └──────────────┘
```

Fig.6

UPPER LIMIT VALUE Vth CALCULATION PROCESSING

~S50

ACQUIRE α2*

~S52

CALCULATE Vth1

| |α2*| | SMALL ⟵⟶ GREAT |
|---|---|
| Vth1 | GREAT ⟵⟶ SMALL |

~S54

ACQUIRE $\dfrac{d\alpha2*}{dt}$

~S56

CALCULATE Vth2

$\left|\dfrac{d\alpha2*}{dt}\right|$

~S58

ACQUIRE β

~S60

ACQUIRE βth

~S62

CALCULATE Vth3

| |βth−β| | SMALL ⟵⟶ GREAT |
|---|---|
| Vth3 | SMALL ⟵⟶ GREAT |

①

## Fig.7

$\beta=-40$、$\alpha1=-20$

$\beta=-40$、$\alpha1=0$

$\beta=-40$、$\alpha1=20$

EP 4 541 675 A1

## INTERNATIONAL SEARCH REPORT

International application No.

**PCT/JP2023/019725**

### A. CLASSIFICATION OF SUBJECT MATTER

*B60W 30/02*(2012.01)i; *B60D 1/00*(2006.01)i; *B62D 13/06*(2006.01)i
FI: B60W30/02; B60D1/00 Z; B62D13/06

According to International Patent Classification (IPC) or to both national classification and IPC

### B. FIELDS SEARCHED

Minimum documentation searched (classification system followed by classification symbols)

B60W30/00-60/00; B60D1/00; B62D13/06; B62D53/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2020-001576 A (AISIN SEIKI) 09 January 2020 (2020-01-09) paragraphs [0055]-[0067], [0088]-[0091] | 1, 6-8, 10-12 |
| A | | 2-5, 9 |
| Y | US 2016/0229452 A1 (FORD GLOBAL TECHNOLOGIES, LLC) 11 August 2016 (2016-08-11) paragraph [0024], fig. 5 | 1, 6-8, 10-12 |
| A | | 2-5, 9 |
| Y | JP 2021-091264 A (FAURECIA CLARION ELECTRONICS CO LTD) 17 June 2021 (2021-06-17) paragraphs [0098]-[0099] | 6 |
| Y | JP 2002-274353 A (NISSAN MOTOR CO LTD) 25 September 2002 (2002-09-25) paragraph [0055] | 8 |
| A | JP 2017-502867 A (ROBERT BOSCH GMBH) 26 January 2017 (2017-01-26) paragraphs [0013]-[0020], fig. 1 | 2 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 July 2023** | **18 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/019725**

| Patent document cited in search report | | | Publication date (day/month/year) | Patent family member(s) | | | Publication date (day/month/year) |
|---|---|---|---|---|---|---|---|
| JP | 2020-001576 | A | 09 January 2020 | US 2020/0001855 A1 paragraphs [0048]-[0060], [0081]-[0084] | | | |
| US | 2016/0229452 | A1 | 11 August 2016 | DE 102016101577 A1 | | | |
| JP | 2021-091264 | A | 17 June 2021 | CN 113022239 A DE 102020214903 A1 US 2021/0171099 A1 paragraphs [0119]-[0120] | | | |
| JP | 2002-274353 | A | 25 September 2002 | DE 60208496 T2 EP 1241064 A2 US 2002/0132702 A1 paragraph [0041] | | | |
| JP | 2017-502867 | A | 26 January 2017 | CN 105829178 A DE 112014004384 T5 US 2016/0264046 A1 paragraphs [0016]-[0023], fig. 1 WO 2015/074027 A1 | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10286950 B